(19)

Europäisches
Patentamt
European
Patent Office
Office européen
des brevets

(11) **EP 2 993 888 A1**

(12) **EUROPEAN PATENT APPLICATION**
published in accordance with Art. 153(4) EPC

(43) Date of publication:
09.03.2016 Bulletin 2016/10

(21) Application number: 14823179.8

(22) Date of filing: 08.07.2014

(51) Int Cl.:
$H04N\ 5/225$ (2006.01)

(86) International application number:
PCT/CN2014/081787

(87) International publication number:
WO 2015/003604 (15.01.2015 Gazette 2015/02)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 08.07.2013 CN 201310284374

(71) Applicant: Huawei Device Co., Ltd.
Shenzhen, Guangdong 518129 (CN)

(72) Inventor: CHEN, Lei
Shenzhen
Guangdong 518129 (CN)

(74) Representative: Körber, Martin Hans
Mitscherlich PartmbB
Patent- und Rechtsanwälte
Sonnenstrasse 33
80331 München (DE)

(54) **METHOD, DEVICE, AND TERMINAL FOR IMAGE PROCESSING**

(57) Embodiments of the present invention disclose an image processing method and apparatus, and a terminal, and relate to the field of data processing, so that a photographed image can be clearer, thereby effectively improving image processing efficiency. The method includes: acquiring luminance of a current photographing environment and a photographing moving speed of a target object; determining an exposure parameter and a gain parameter according to the luminance of the current photographing environment and the moving speed of the target object; and processing an acquired image of the target object according to the exposure parameter and the gain parameter. The present invention is applicable to data processing technologies.

```
┌──────────────────────────────────────────┐
│ Acquire luminance of a current photographing │  S11
│ environment and a photographing moving speed of │
│ a target object                            │
└──────────────────────────────────────────┘
                     │
                     ▼
┌──────────────────────────────────────────┐
│ Determine an exposure parameter and a gain │  S12
│ parameter according to the luminance of the │
│ current photographing environment and the  │
│ photographing moving speed of the target object │
└──────────────────────────────────────────┘
                     │
                     ▼
┌──────────────────────────────────────────┐
│ Process an acquired image of the target object │  S13
│ according to the exposure parameter and the gain │
│ parameter                                  │
└──────────────────────────────────────────┘
```

FIG. 1

EP 2 993 888 A1

# Description

This application claims priority to Chinese Patent Application No. 201310284374.6, filed with the Chinese Patent Office on July 8, 2013, and entitled "IMAGE PROCESSING METHOD AND APPARATUS, AND TERMINAL", which is incorporated herein by reference in its entirety.

## TECHNICAL FIELD

The present invention relates to the field of data processing, and in particular, to an image processing method and apparatus, and a terminal.

## BACKGROUND

Current terminals such as a mobile phone and a tablet computer are all equipped with cameras, and a user may take a photograph anytime and anywhere by using a terminal.

However, due to a size limit, a terminal such as a mobile phone is equipped with a camera having a small aperture, and cannot maintain sufficient exposure when a very short shutter time (an exposure time) is set. In this way, when a moving object is photographed by using a terminal, obvious visual shadow and streaking phenomena generally occur, so that a photographed image is very unclear, thereby reducing image processing efficiency.

## SUMMARY

Embodiments of the present invention provide an image processing method and apparatus, and a terminal, so that a photographed image can be clearer, thereby effectively improving image processing efficiency.

According to a first aspect, an embodiment of the present invention provides a photographing method, where the method includes:

acquiring luminance of a current photographing environment and a photographing moving speed of a target object;
determining an exposure parameter and a gain parameter according to the luminance of the current photographing environment and the moving speed of the target object; and
processing an acquired image of the target object according to the exposure parameter and the gain parameter.

In a first possible implementation manner of the first aspect, when the target object moves and an image processing apparatus keeps motionless, the acquiring a photographing moving speed of the target object includes:

acquiring a distance that the target object moves between images of two adjacent frames;
acquiring a time interval between the images of two adjacent frames; and
acquiring the photographing moving speed of the target object according to the distance that the target object moves and the time interval.

With reference to the first possible implementation manner of the first aspect, in a second possible implementation manner of the first aspect, the acquiring a distance that the target object moves between images of two adjacent frames includes:

determining at least one key information point in a shot range;
acquiring a location of the key information point in each of the images of two adjacent frames; and
determining, according to the location of the key information point in each of the images of two adjacent frames, the distance that the target object moves between the images of two adjacent frames.

In a third possible implementation manner of the first aspect, when the target object keeps motionless and an image processing apparatus is in a moving state, a moving speed of the apparatus is used as the photographing moving speed of the target object.

In a fourth possible implementation manner of the first aspect, when the target object and an image processing apparatus are both in a moving state and moving speeds of the target object and the image processing apparatus are inconsistent, the acquiring a photographing moving speed of the target object includes:

acquiring a distance that the target object moves between images of two adjacent frames,
acquiring a time interval between the images of two adjacent frames, and
acquiring the photographing moving speed of the target object according to the distance that the target object moves and the time interval; and
when the target object and the image processing apparatus are both in the moving state and the moving speeds of the target object and the image processing apparatus are consistent, the acquired photographing moving speed of the target object is zero.

In a fifth possible implementation manner of the first aspect, the determining an exposure parameter and a gain parameter according to the luminance of the current photographing environment and the moving speed includes:

determining, according to the luminance of the current photographing environment and the moving speed of the target object, the exposure parameter by searching a preset exposure parameter table; and determining the gain parameter according to the exposure parameter.

With reference to the first possible implementation manner or the second possible implementation manner of the first aspect, in a sixth possible implementation manner of the first aspect, the method further includes:

performing smoothing processing on the photographing moving speed.

According to a second aspect, an embodiment of the present invention provides an image processing apparatus, where the apparatus includes:

an acquiring unit, configured to acquire luminance of a current photographing environment and a photographing moving speed of a target object; a determining unit, configured to determine an exposure parameter and a gain parameter according to the luminance of the current photographing environment and the moving speed of the target object that are acquired by the acquiring unit; and a processing unit, configured to process an acquired image of the target object according to the exposure parameter and the gain parameter that are determined by the determining unit.

In a first possible implementation manner of the second aspect, when the target object moves and the image processing apparatus keeps motionless, the acquiring unit includes:

a first acquiring module, configured to acquire a distance that the target object moves between images of two adjacent frames; a second acquiring module, configured to acquire a time interval between the images of two adjacent frames; and a third acquiring module, configured to acquire the photographing moving speed of the target object according to the distance that the target object moves and the time interval.

With reference to the first possible implementation manner of the second aspect, in a second possible implementation manner of the second aspect, the first acquiring module is specifically configured to:

determine at least one key information point in a shot range; acquire a location of the key information point in each of the images of two adjacent frames; and determine, according to the location of the key information point in each of the images of two adjacent frames, the distance that the target object moves between the images of two adjacent frames.

In a third possible implementation manner of the second aspect, when the target object keeps motionless and the image processing apparatus is in a moving state, the acquiring unit uses a moving speed of the apparatus as the photographing moving speed of the target object.

In a fourth possible implementation manner of the second aspect, when the target object and the image processing apparatus are both in a moving state and moving speeds of the target object and the image processing apparatus are inconsistent, the first acquiring module is further configured to acquire a distance that the target object moves between images of two adjacent frames, the second acquiring module is further configured to acquire a time interval between the images of two adjacent frames, and the third acquiring module is further configured to acquire the photographing moving speed of the target object according to the distance that the target object moves and the time interval; and when the target object and the image processing apparatus are both in the moving state, and the moving speeds of the target object and the image processing apparatus are consistent, the photographing moving speed, which is acquired by the third acquiring module, of the target object is zero.

In a fifth possible implementation manner of the second aspect, the determining unit includes:

a first parameter acquiring module, configured to determine, according to the luminance of the current photographing environment and the moving speed of the target object, the exposure parameter by searching a preset exposure parameter table; and a second parameter acquiring module, configured to determine the gain parameter according to the exposure parameter.

With reference to the first possible implementation manner of the second aspect or the second possible implementation manner of the second aspect of the second aspect, in a sixth possible implementation manner of the second aspect, the processing unit is further configured to perform smoothing processing on the photographing moving speed.

According to a third aspect, an embodiment of the present invention provides a terminal, where the terminal includes the image processing apparatus according to the second aspect or any one implementation manner of the possible implementation manners of the second aspect.

According to the image processing method and apparatus, and the terminal that are provided in the embodiments of the present invention, first, luminance of a current photographing environment and a photographing moving speed of a target object are acquired; next, an exposure parameter and a gain parameter are determined according to the luminance of the current photographing environment and the moving speed of the target object; and then, an acquired image of the target object is processed according to the determined exposure parameter and gain parameter. It can be seen from the foregoing that, in such a manner in which an exposure parameter and a gain parameter may be determined by using luminance of a current photographing environment and a photographing moving speed of a target object, a case in which a visual shadow or streaking appears in a photographed image when a photographed target object is a moving object is avoided, so that the photographed image is clearer, thereby effectively improving image processing efficiency.

**BRIEF DESCRIPTION OF DRAWINGS**

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.

FIG. 1 is a schematic flowchart of an image processing method according to Embodiment 1 of the present invention;

FIG. 2 is a schematic diagram of a table of the image processing method according to Embodiment 1 of the present invention;

FIG. 3 is a schematic structural diagram of an image processing apparatus according to Embodiment 2 of the present invention;

FIG. 4 is another schematic structural diagram of the image processing apparatus according to Embodiment 2 of the present invention;

FIG. 5 is still another schematic structural diagram of the image processing apparatus according to Embodiment 2 of the present invention;

FIG. 6 is a schematic structural diagram of an image processing apparatus according to Embodiment 3 of the present invention; and

FIG. 7 is a schematic flowchart of an image processing method according to Embodiment 4 of the present invention.

**DESCRIPTION OF EMBODIMENTS**

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

**Embodiment 1**

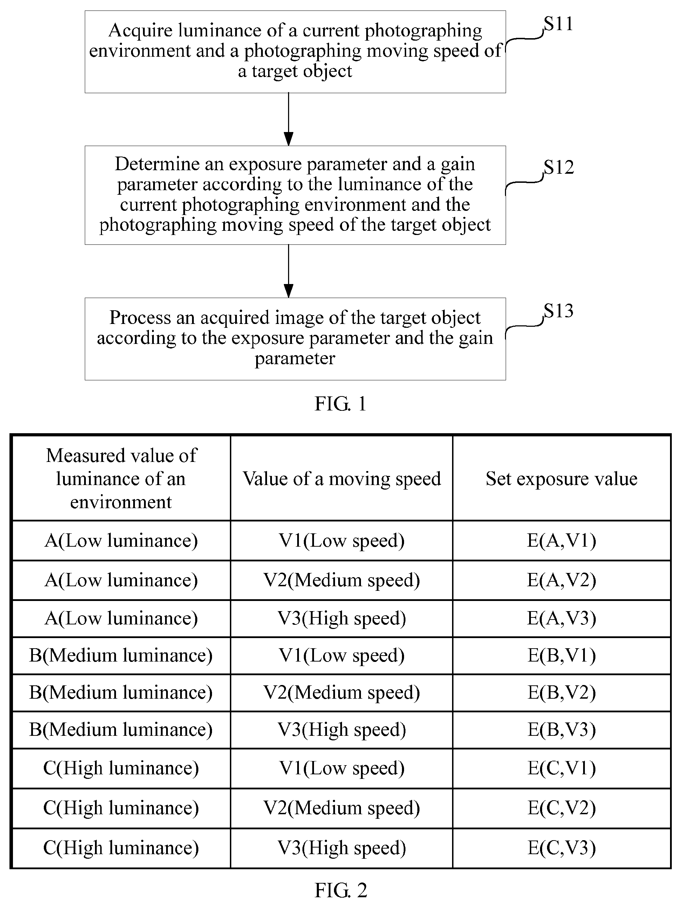

Embodiment 1 of the present invention provides an image processing method. The method is executed by a terminal and is specifically executed by an image processing apparatus installed in the terminal. As shown in FIG. 1, the method specifically includes the following steps:

S11. Acquire luminance of a current photographing environment and a photographing moving speed of a target object.

In this step, the target object refers to one or more persons, animals, scenes, or the like in a shot range of the image processing apparatus. The photographing moving speed of the target object refers to a moving speed of a photographed target object relative to the image processing apparatus. It should be noted that the image processing apparatus may be configured to acquire all images in the shot range, and certainly, all the images include an image of the target object. The image processing apparatus may include components such as a camera, a light sensor, and an image processor.

According to different states of the image processing apparatus and the target object, the following three cases may be specifically classified:

In a first case, the target object is in a moving state, and the image processing apparatus keeps in a motionless state; in a second case, the target object keeps in a motionless state, and the image processing apparatus is in a moving state; and in a third case, the target object and the image processing apparatus are both in a moving state.

It should be noted that, in this embodiment of the present invention, states of the target object and the image processing apparatus in the foregoing three cases are relative to the ground.

Specific implementation processes of acquiring the photographing moving speed of the target object in the foregoing three cases are as follows:

In the first case, when the target object is in the moving state and the image processing apparatus keeps in the motionless state, acquiring the photographing moving speed of the target object may include the following process:

11. Acquire a distance that the target object moves between images of two adjacent frames.

12. Acquire a time interval between the images of two adjacent frames.

13. Acquire the photographing moving speed of the target object between the images of two adjacent frames according to the distance that the target object moves and the time interval.

A specific process of acquiring the distance that the target object moves between the images of two adjacent frames in step 11 may be:

111. Determine at least one key information point in a shot range.

In this embodiment of the present invention, an RGB (Red Green Blue, red green blue) color standard may be used in the image processing apparatus. According to an RGB principle, three primary colors: red, green, and blue may be mixed according to different proportions to generate millions of colors, and in an RGB mode, each pixel in an image can be allocated an intensity value ranging from 0 to 255. Because each pixel in an image is allocated a different color and intensity, a color and luminance of an information point in the shot range differs from that of a surrounding environment, so that the information point may be determined as a key information point. For example, the key information point may be a flower on a green meadow, black hairs of a person, a facial feature, or the like.

112. Acquire a location of the key information point in each of the images of two adjacent frames; and determine, according to the location of the key information point in each of the images of two adjacent frames, the distance that the target object moves between the images of two adjacent frames.

In a specific embodiment of the present invention, step 112 may further be divided into the following two steps:

1121. Determine the at least one key information point in an image of a first frame, and for an image of a second frame or an image after a second frame, a key information point the same as that of the image of the first frame may be taken for analysis.

For example, two key information points are determined in the image of the first frame, where it may be determined that a quantity of key information points on the target object is one, and it may be determined that a quantity of key information points in a surrounding area is one.

1122. Determine locations of the two key information points in the images of two adjacent frames; and determine, according to the locations of the key information points in each of the images of two adjacent frames, the distance that the target object moves between the images of two adjacent frames.

A coordinate axis method may be used for determining the distance that the target object moves between the images of two adjacent frames. For example, in the image of the first frame, coordinates of a key information point a of the target object are (0, 4), and coordinates of a key information point b in the surrounding area are (2, 6); and in the image of the second frame, coordinates of the key information point a are (3, 8), and coordinates of the key information point b are still (2, 6). Because values of the coordinates of the key information point b keep unchanged, the surrounding area represented by the key information point b does not move, so that it may be obtained that the distance that the target object moves is 5.

In this step, the time interval between the images of two adjacent frames is set by the image processing apparatus according to the luminance of the current environment. Specifically, in a preview stage before photographing, when luminance of a photographing environment is low, an exposure time required by an image of each frame needs to be increased accordingly. The image processing apparatus adjusts an image output frame rate in real time according to a current exposure time, so that the image output frame rate is reduced, that is, the time interval between the images of two adjacent frames is increased; otherwise, when the luminance of the photographing environment is high, the exposure time needs to be shortened accordingly, so that the output frame rate is improved, that is, the time interval between the images of two adjacent frames is shortened.

In the second case, when the target object keeps in the motionless state and the image processing apparatus is in the moving state, a moving speed of the apparatus is used as the photographing moving speed of the target object.

When distances that all or most key information points move between the images of two adjacent frames are the same, it may be determined that the target object keeps in the motionless state.

In this case, the moving speed of the apparatus is easy to be acquired in the prior art, for example, the moving speed of the apparatus may be directly measured, and in this way, the acquired moving speed of the apparatus is the photographing moving speed of the target object. How to acquire the photographing moving speed of the target object is not specifically limited in the present invention.

In the third case, when the target object and the image processing apparatus are both in the moving state and moving speeds of the target object and the image processing apparatus are inconsistent, a relative moving speed between the target object and the image processing apparatus is used as the photographing moving speed of the target object.

In this case, acquiring the photographing moving speed of the target object includes: acquiring a distance that the target object moves between images of two adjacent frames; acquiring a time interval between the images of two adjacent frames; and acquiring the photographing moving speed of the target object according to the distance that the target object moves and the time interval.

Certainly, when the target object and the image processing apparatus are both in the moving state and the moving speeds of the target object and the image processing apparatus are consistent, the distance that the target object moves between the images of two adjacent frames is zero because the relative moving speed between the target object and the apparatus is zero, so that the photographing moving speed of the target object is zero.

In addition, in order to enhance smoothness and accuracy of an operation result of the photographing moving speed, before photographing, corresponding smoothing processing may further be performed on results, which are obtained by means of measurement and calculation, of photographing moving speeds of the target object between images of multiple adjacent frames, so that a more accurate photographing moving speed of the target object is obtained during the photographing.

There are multiple methods for performing smoothing processing on data, for example, a speed smoothing formula may be selected for calculation. Specifically, the smoothing processing may be performed on the results of the moving speeds according to the following speed smoothing formula:

the speed smoothing formula:

$$Vc = a * Vo + (1-a) * Vnow;$$

and

$$Vo = Vc,$$

where, Vc is a moving speed obtained after smoothing, Vo is a moving speed calculated last time and obtained after smoothing, Vnow is a moving speed calculated currently, and a is a proportional coefficient, where a value range of a is (0, 1).

For example, a value of a may be 0.5, and in this way, Vnow obtained by means of current calculation accounts for only 50% of finally used Vc. For example, a previous speed is 100, and Vnow is 200 due to a certain reason (for example, a possible calculation error); however, an actual speed may be only 120. After processing is performed by using the smoothing formula, a value of Vc obtained by means of calculation is 150, that is, a peak value that Vnow may reach is smoothed to some extent, thereby reducing an error between Vnow and an actual moving speed.

S12. Determine an exposure parameter and a gain parameter according to the luminance of the current photographing environment and the photographing moving speed of the target object.

In this embodiment of the present invention, the exposure parameter is a numerical value representing definition of a photographed image, and the gain parameter is a numerical value representing luminance of a photographed image. A numerical value of the exposure parameter and a numerical value of the gain parameter may be determined according to a value of the acquired luminance of the environment and a value of the acquired photographing moving speed. The exposure parameter in this embodiment of the present invention refers to an exposure time.

How the photographing moving speed affects the exposure parameter and the gain parameter is described in the following. In this embodiment of the present invention, in a case in which the luminance of the environment keeps unchanged, a faster photographing moving speed of the target object indicates a shorter set exposure time. However, shortening of the exposure time indicates that luminance of a photographed image is reduced, and to ensure the luminance of the photographed image, the gain parameter needs to be increased.

It should be noted that in this embodiment of the present invention, an exposure parameter table may be established, where the luminance of the current photographing environment and the photographing moving speed of the target object are used as input parameters of the exposure parameter table, and the exposure parameter is used as an output parameter of the exposure parameter table. As shown in FIG. 2, A, B, and C represent values of the luminance of the environment, V1, V2, and V3 represent values of the moving speed, and E represents a value of the exposure parameter. When the moving speed is not zero, a calculation relationship among the three may be calculated by using a formula = (M * luminance/speed), where M is a constant, and may also be slightly adjusted based on this calculated value according to an actual condition. In conclusion, the value of the exposure parameter is inversely proportional to that of the moving speed, and is proportional to that of the luminance of the environment. Certainly, the foregoing table is only used as an example in this embodiment of the present invention. In an actual application, the luminance and the speed, for example, both may be classified into more levels, which is not limited in the present invention.

In this way, the exposure parameter may be acquired according to the luminance of the current photographing environment and the photographing moving speed of the target object by searching the exposure parameter table. Because a certain value is obtained by multiplying the exposure parameter by the gain parameter, the gain parameter may be obtained according to the exposure parameter.

It should be noted that a numerical value in the exposure parameter table may be preset, so that when a user photographs a target object, the user may find a corresponding exposure parameter directly in the preset exposure parameter table according to luminance of a current environment and a photographing moving speed of the target object.

S13. Process an acquired image of the target object according to the exposure parameter and the gain parameter.

In this step, content of processing the image includes image collection and luminance processing after the collection. Processes of the collection and the luminance processing are the same as those in the prior art, and details are not described herein. After the image is processed, the processed image further needs to be compressed and stored. Processes of compressing and storing the image are the same as those in the prior art, and details are not described herein.

According to the image processing method in this embodiment of the present invention, first, luminance of a current photographing environment and a photographing moving speed of a target object are acquired; next, an exposure parameter and a gain parameter are determined according to the luminance of the current photographing environment and the moving speed of the target object; and then, an acquired image of the target object is processed according to the determined exposure parameter and gain parameter. It can be seen from the foregoing that, in such a manner in which an exposure parameter and a gain parameter may be determined by using luminance of a current photographing environment and a photographing moving speed of a target object, a case in which a visual shadow or streaking appears in a photographed image when a photographed target object is a moving object is avoided, so that the photographed image is clearer, thereby effectively improving image processing efficiency.

**Embodiment 2**

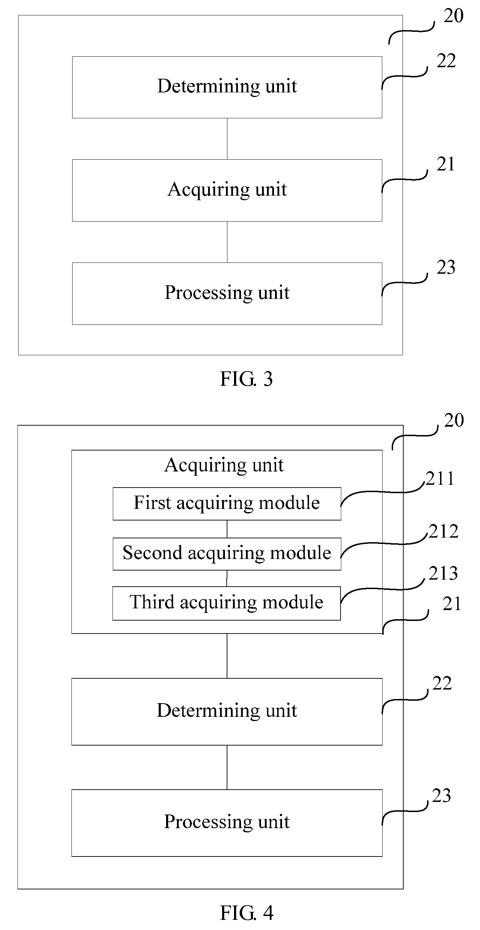

Correspondingly, Embodiment 2 of the present invention further provides an image processing apparatus 20. As shown in FIG. 3, the apparatus 20 includes:

an acquiring unit 21, configured to acquire luminance of a current photographing environment and a photographing moving speed of a target object; a determining unit 22, configured to determine an exposure parameter and a gain parameter according to the luminance of the current photographing environment and the moving speed of the target object that are acquired by the acquiring unit 21; and a processing unit 23, configured to process an acquired image of the target object according to the exposure parameter and the gain parameter that are determined by the determining unit 22.

According to the image processing apparatus 20 in this embodiment of the present invention, first, the determining unit 22 determines the exposure parameter and the gain parameter according to the luminance of the current photographing environment and the moving speed of the target object that are acquired by the acquiring unit 21; and then, the processing unit 23 processes the acquired image of the target object according to the exposure parameter and the gain parameter that are determined by the determining unit 22. It can be seen from the foregoing that, this apparatus may determine the exposure parameter and the gain parameter according to the luminance of the current photographing environment and the photographing moving speed of the target object, which avoids a case in which a visual shadow or streaking appears in a photographed image when a photographed target object is a moving object, so that the photographed image is clearer, thereby effectively improving image processing efficiency.

Optionally, in an embodiment of the present invention, when the target object moves and the image processing apparatus keeps motionless, as shown in FIG. 4, the acquiring unit 21 includes:

a first acquiring module 211, configured to acquire a distance that the target object moves between images of two adjacent frames; a second acquiring module 212, configured to acquire a time interval between the images of two adjacent frames; and a third acquiring module 213, configured to acquire the photographing moving speed of the target object according to the distance that the target object moves and the time interval.

Further, in an embodiment of the present invention, the first acquiring module 211 is specifically configured to: determine at least one key information point in a shot range; acquire a location of the key information point in each of the images of two adjacent frames; and determine, according to the location of the key information point in each of the images of two adjacent frames, the distance that the target object moves between the images of two adjacent frames.

Further, in an embodiment of the present invention, the processing unit 23 is further configured to perform smoothing processing on the photographing moving speed. This processing manner can enhance smoothness and accuracy of an operation result of the photographing moving speed.

Optionally, in an embodiment of the present invention, when the target object keeps motionless and the image processing apparatus moves, the acquiring unit 21 uses a moving speed of the image processing apparatus as the photographing moving speed of the target object.

Optionally, in an embodiment of the present invention, when the target object and the image processing apparatus are both in a moving state and moving speeds of the target object and the image processing apparatus are inconsistent, the first acquiring module 211 is further configured to acquire a distance that the target object moves between images of two adjacent frames; the second acquiring module 212 is further configured to acquire a time interval between the images of two adjacent frames; and the third acquiring module 213 is further configured to acquire the photographing moving speed of the target object according to the distance that the target object moves and the time interval.

When the target object and the image processing apparatus are both in the moving state and the moving speeds of the target object and the image processing apparatus are consistent, because a relative moving speed between the target object and the apparatus is zero, the distance that the target object moves between the images of two adjacent frames and is acquired by the first acquiring module 211 is zero, so that the photographing moving speed, which is acquired by the third acquiring module 213, of the target object is zero.

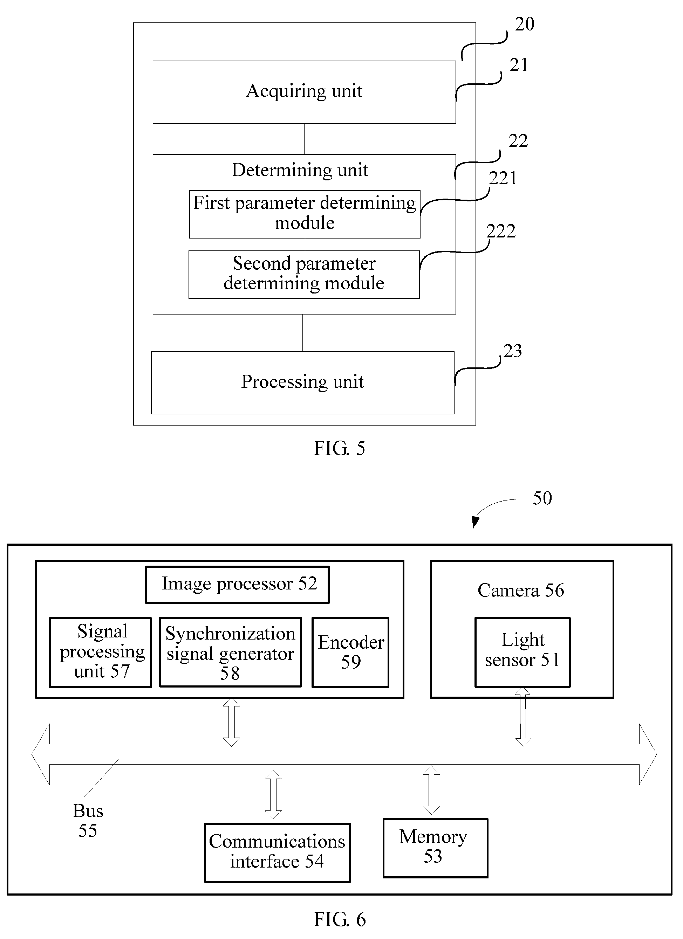

Optionally, in an embodiment of the present invention, as shown in FIG. 5, the determining unit 22 includes: a first parameter determining module 221, configured to determine, according to the luminance of the current photographing environment and the moving speed of the target object, the exposure parameter by searching a preset exposure parameter table; and a second parameter determining module 222, configured to determine the gain parameter according to the exposure parameter.

It should be noted that, for specific functions of structural units of the image processing apparatus 20 provided in this embodiment of the present invention, refer to the foregoing method embodiment.

Embodiment 3

FIG. 6 shows another embodiment of an image processing apparatus according to the present invention. It should be understood that an image processing apparatus 50 shown in the figure is only an example of the image processing apparatus, and the image processing apparatus 50 may have more or fewer components than those shown in the figure, may combine two or more components or may have different component configurations. Various components shown in the figure may be implemented by hardware including one or more signal processing and/or application specific integrated circuits, software, or a combination of software and hardware.

As shown in FIG. 6, the image processing apparatus 50 provided in this embodiment includes a light sensor 51, an image processor 52, a memory 53, a communications interface 54, a bus 55, and a camera 56. The light sensor 51 is disposed in the camera 56. The light sensor 51, the image processor 52, the memory 53, and the communications interface 54 are connected by using the bus 55 to complete communication. The bus 55 may be an industry standard architecture (Industry Standard Architecture, ISA for short) bus, a peripheral component interconnect (Peripheral Component, PCI for short) bus, or an extended industry standard architecture (Extended Industry Standard Architecture, EISA for short) bus, or the like. The bus 55 may be classified into an address bus, a data bus, a control bus, or the like. For ease of representation, the bus 55 is represented by using only a bold line in FIG. 6, but it does not indicate that there is only one bus or one type of buses.

The memory 53 is configured to store executable program code, and the program code includes a computer operation instruction. The memory 53 may include a high-speed RAM memory, or may include a non-volatile memory (non-volatile memory), for example, one or more magnetic disk storage devices, a flash memory, or another volatile solid-state storage device. The memory 53 may be accessed by the image processor 52, the communications interface 54, and the like.

The light sensor 51 is configured to acquire luminance of a current photographing environment. Specifically, the light sensor 51 is configured to covert ambient light into an electrical signal; and the electrical signal is compressed and then is saved by the memory 53.

The image processor 52 includes a signal processing unit 57, a synchronization signal generator 58, an encoder 59, and the like, so as to: acquire a photographing moving speed of a target object; determine an exposure parameter and a gain parameter according to the photographing moving speed of the target object and the luminance of the current photographing environment that is acquired by the light sensor 51; and process an image, which is acquired by the camera 56, of the target object.

Optionally, in an embodiment of the present invention, when the target object moves and the image processing apparatus 50 keeps motionless, the image processor 52 is configured to: acquire a distance that the target object moves between images of two adjacent frames; acquire a time interval between the images of two adjacent frames; and acquire the photographing moving speed of the target object according to the distance that the target object moves and the time interval.

Further, in an embodiment of the present invention, the image processor 52 is specifically further configured to:

determine at least one key information point in a shot range; acquire a location of the key information point in each of the images of two adjacent frames; and determine, according to the location of the key information point in each of the images of two adjacent frames, the distance that the target object moves between the images of two adjacent frames.

Further, in an embodiment of the present invention, the image processor 52 may further be configured to perform smoothing processing on the photographing moving speed.

Optionally, in an embodiment of the present invention, when the target object keeps motionless and the image processing apparatus 50 is in a moving state, the image processor 52 uses a moving speed of the apparatus 50 as the photographing moving speed of the target object.

Optionally, in an embodiment of the present invention, when the target object and the image processing apparatus 50 are both in a moving state and moving speeds of the target object and the image processing apparatus 50 are inconsistent, the image processor 52 is configured to: acquire a distance that the target object moves between images of two adjacent frames; acquire a time interval between the images of two adjacent frames; and acquire the photographing moving speed of the target object according to the distance that the target object moves and the time interval.

When the target object and the image processing apparatus 50 are both in the moving state and the moving speeds of the target object and the image processing apparatus 50 are consistent, the photographing moving speed, which is acquired by the image processor 52, of the target object is zero.

Optionally, in an embodiment of the present invention, the image processor 52 is configured to:

determine, according to the luminance of the current photographing environment and the moving speed of the target object, the exposure parameter by searching a preset exposure parameter table by using the memory 53; and determine the gain parameter according to the exposure parameter.

The image processor 52 may be a central processing unit (Central Processing Unit, CPU for short), or an application specific integrated circuit (Application Specific Integrated Circuit, ASIC for short), or one or more integrated circuits configured to implement this embodiment of the present invention.

It should be noted that, in addition to the foregoing functions, the foregoing image processor 52 may further be configured to execute other processes in the foregoing method embodiment, and details are not described herein.

It should be further noted that, for division of functional units in the image processor 52, reference may be made to the foregoing embodiment of the image processing apparatus, and details are not described herein.

Correspondingly, this embodiment of the present invention further provides a terminal, where the terminal includes the image processing apparatus described in any embodiment in the embodiments of the image processing apparatus described above.

For example, the terminal provided in this embodiment of the present invention may be any kind of device that has a photographing function, such as a mobile phone, a tablet computer, a personal digital assistant, or a PC.

**Embodiment 4**

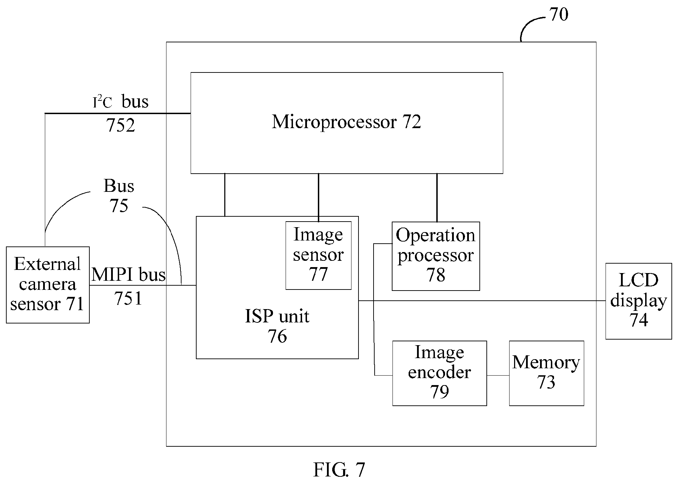

FIG. 7 is a structural block diagram of a part of a mobile phone 70 that is related to a terminal provided in this embodiment of the present invention. As shown in FIG. 7, the mobile phone 70 includes modules such as an external camera sensor 71, a microprocessor 72, a memory 73, an LCD (Liquid Crystal Display, liquid crystal display) display 74, a bus 75, an ISP (Image Signal Processor, image signal processing) unit 76, an image sensor 77, an operation processor 78, and an image encoder 79.

The bus 75 includes an MIPI (Mobile Industry Processor, mobile industry processor) bus 751 and an (Iner-Integrated Circuit) bus 752.

A person skilled in the art may understand that a structure of the mobile phone shown in FIG. 7 does not constitute a limitation to the mobile phone, and the mobile phone may include more components or fewer components than those shown in the FIG. 7, or some components may be combined, or different component deployment may be used.

Composition components of the mobile phone 70 are specifically introduced in the following with reference to FIG. 7.

In a preview stage, the external camera sensor 71 may be configured to collect an image, and a collected image of each frame is sent to the ISP unit 76 in the microprocessor 72 through the MIPI bus 751.

The operation processor 78 is configured to determine a photographing moving speed of a target object, and send an obtained result of the photographing moving speed to the microprocessor 72; and at the same time, the ISP unit 76 also sends luminance, which is acquired by a light sensor, of a current photographing environment to the microprocessor 72. In this way, the microprocessor 72 determines, according to the photographing moving speed of the target object and the luminance of the current photographing environment, an exposure parameter and a gain parameter that are required in a photographing stage.

In the photographing stage, in one aspect, the microprocessor 72 sends, through the bus 752, the exposure parameter obtained according to the previous preview stage to the external camera sensor 71 for setting, so that the ISP unit 76 can collect the image according to the exposure parameter; and in another aspect, the microprocessor 72 sends the gain parameter to an ISP module for setting, so that the ISP unit 76 can perform luminance processing on the collected image according to the gain parameter.

The image obtained after the luminance processing is sent to the image encoder 79 for image compression, and the memory 73 stores the image, or the image is displayed by using the LCD display 74. The specific method in Embodiment 1 may be implemented by the mobile phone 70, and details are not described herein.

Although not shown in the figure, the mobile phone 70 may further include a camera, a Bluetooth module, and the like, which are not described herein.

The embodiments in this specification are all described in a progressive manner, for same or similar parts in the embodiments, reference may be made to these embodiments, and each embodiment focuses on a difference from other embodiments. Especially, an apparatus embodiment is basically similar to a method embodiment, and therefore is described briefly; for related parts, reference may be made to a description of a part in the method embodiment.

It should be noted that the described apparatus embodiment is merely exemplary. The units described as separate parts may or may not be physically separate, and parts displayed as units may or may not be physical units, may be located in one position, or may be distributed on multiple network units. Some or all of the modules may be selected according to actual requirements to achieve the objectives of the solutions of the embodiments. In addition, in the accompanying drawings of the apparatus embodiments provided in the present invention, connection relationships between modules indicate that the modules have communication connections with each other, which may be specifically implemented as one or more communications buses or signal cables. A person of ordinary skill in the art may understand and implement the embodiments of the present invention without creative efforts.

Based on the description of the foregoing implementation manners, a person skilled in the art may clearly understand that the present invention may be implemented by software in addition to necessary universal hardware, or by dedicated hardware, including a dedicated integrated circuit, a dedicated CPU, a dedicated memory, a dedicated component, and the like. Generally, any function that can be performed by a computer program can be easily implemented by using corresponding hardware. Moreover, a specific hardware structure used to implement a same function may be of various forms, for example, in a form of an analog circuit, a digital circuit, a dedicated circuit, or the like. However, for the present invention, software program implementation is a better implementation manner in most cases. Based on this understanding, the technical solutions of the present invention essentially or the part contributing to the prior art may be implemented in a form of a software product. The computer software product is stored in a readable storage medium, such as a floppy disk, a USB flash drive, a removable hard disk, a read-only memory (ROM, Read-Only Memory), a random access memory (RAM, Random Access Memory), a magnetic disk, or an optical disc of a computer; and includes several instructions for instructing a computer device (which may be a personal computer, a server, a network device, or the like) to perform the methods described in the embodiments of the present invention.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. An image processing method, comprising:

   acquiring luminance of a current photographing environment and a photographing moving speed of a target object;
   determining an exposure parameter and a gain parameter according to the luminance of the current photographing environment and the photographing moving speed of the target object; and
   processing an acquired image of the target object according to the exposure parameter and the gain parameter.

2. The method according to claim 1, wherein when the target object moves and an image processing apparatus keeps motionless, the acquiring a photographing moving speed of the target object specifically comprises:

   acquiring a distance that the target object moves between images of two adjacent frames;
   acquiring a time interval between the images of two adjacent frames; and
   acquiring the photographing moving speed of the target object according to the distance that the target object moves and the time interval.

3. The method according to claim 2, wherein the acquiring a distance that the target object moves between images of two adjacent frames specifically comprises:

   determining at least one key information point in a shot range;
   acquiring a location of the key information point in each of the images of two adjacent frames; and
   determining, according to the location of the key information point in each of the images of two adjacent frames, the distance that the target object moves between the images of two adjacent frames.

4. The method according to claim 1, wherein when the target object keeps motionless and an image processing apparatus is in a moving state, a moving speed of the apparatus is used as the photographing moving speed of the target object.

5. The method according to claim 1, wherein

when the target object and an image processing apparatus are both in a moving state and moving speeds of the target object and the image processing apparatus are inconsistent, the acquiring a photographing moving speed of the target object comprises:

acquiring a distance that the target object moves between images of two adjacent frames,
acquiring a time interval between the images of two adjacent frames, and
acquiring the photographing moving speed of the target object according to the distance that the target object moves and the time interval; and
when the target object and the image processing apparatus are both in the moving state and the moving speeds of the target object and the image processing apparatus are consistent, the acquired photographing moving speed of the target object is zero.

6. The method according to claim 1, the determining an exposure parameter and a gain parameter according to the luminance of the current photographing environment and the moving speed comprises:

determining, according to the luminance of the current photographing environment and the moving speed of the target object, the exposure parameter by searching a preset exposure parameter table; and
determining the gain parameter according to the exposure parameter.

7. The method according to claim 2 or 3, wherein the method further comprises:

performing smoothing processing on the photographing moving speed.

8. An image processing apparatus, comprising:

an acquiring unit, configured to acquire luminance of a current photographing environment and a photographing moving speed of a target object;
a determining unit, configured to determine an exposure parameter and a gain parameter according to the luminance of the current photographing environment and the photographing moving speed of the target object that are acquired by the acquiring unit; and
a processing unit, configured to process the acquired image of the target object according to the exposure parameter and the gain parameter that are determined by the determining unit.

9. The apparatus according to claim 8, wherein when the target object moves and the image processing apparatus keeps motionless, the acquiring unit comprises:

a first acquiring module, configured to acquire a distance that the target object moves between images of two adjacent frames;
a second acquiring module, configured to acquire a time interval between the images of two adjacent frames; and
a third acquiring module, configured to acquire the photographing moving speed of the target object according to the distance that the target object moves and the time interval, wherein the distance that the target object moves is acquired by the first acquiring module and the time interval is acquired by the second acquiring module.

10. The apparatus according to claim 9, wherein the first acquiring module is specifically configured to:

determine at least one key information point in a shot range;
acquire a location of the key information point in each of the images of two adjacent frames; and
determine, according to the location of the key information point in each of the images of two adjacent frames, the distance that the target object moves between the images of two adjacent frames.

11. The apparatus according to claim 8, wherein when the target object keeps motionless and the image processing apparatus is in a moving state, the acquiring unit uses a moving speed of the apparatus as the photographing moving speed of the target object.

12. The apparatus according to claim 8, wherein
when the target object and the image processing apparatus are both in a moving state and moving speeds of the target object and the image processing apparatus are inconsistent,
the first acquiring module is further configured to acquire a distance that the target object moves between images of two adjacent frames,
the second acquiring module is further configured to acquire a time interval between the images of two adjacent frames, and
the third acquiring module is further configured to acquire the photographing moving speed of the target object according to the distance that the target object moves and the time interval; and
when the target object and the image processing apparatus are both in the moving state and the moving speeds of the target object and the image processing apparatus are consistent, the photographing moving speed, which is acquired by the third acquiring module, of the target object is zero.

13. The apparatus according to claim 8, wherein the determining unit comprises:

a first parameter determining module, configured to determine, according to the luminance of the current photographing environment and the moving speed of the target object, the exposure parameter by searching a preset exposure parameter table; and
a second parameter determining module, configured to determine the gain parameter according to the exposure parameter.

14. The apparatus according to claim 7 or 8, wherein the processing unit is further configured to perform smoothing processing on the photographing moving speed.

15. A terminal, wherein the terminal comprises the image processing apparatus according to any one of claims 8 to 14.

Acquire luminance of a current photographing environment and a photographing moving speed of a target object $\quad$ S11

Determine an exposure parameter and a gain parameter according to the luminance of the current photographing environment and the photographing moving speed of the target object $\quad$ S12

Process an acquired image of the target object according to the exposure parameter and the gain parameter $\quad$ S13

FIG. 1

| Measured value of luminance of an environment | Value of a moving speed | Set exposure value |
|---|---|---|
| A(Low luminance) | V1(Low speed) | E(A,V1) |
| A(Low luminance) | V2(Medium speed) | E(A,V2) |
| A(Low luminance) | V3(High speed) | E(A,V3) |
| B(Medium luminance) | V1(Low speed) | E(B,V1) |
| B(Medium luminance) | V2(Medium speed) | E(B,V2) |
| B(Medium luminance) | V3(High speed) | E(B,V3) |
| C(High luminance) | V1(Low speed) | E(C,V1) |
| C(High luminance) | V2(Medium speed) | E(C,V2) |
| C(High luminance) | V3(High speed) | E(C,V3) |

FIG. 2

20

22

Determining unit

21

Acquiring unit

23

Processing unit

FIG. 3

20

Acquiring unit

211
First acquiring module

212
Second acquiring module

213
Third acquiring module

21

22
Determining unit

23
Processing unit

FIG. 4

20

21

Acquiring unit

22

Determining unit

221

First parameter determining module

222

Second parameter determining module

23

Processing unit

FIG. 5

50

Image processor 52

| Signal processing unit 57 | Synchronization signal generator 58 | Encoder 59 |

Camera 56

Light sensor 51

Bus 55

Communications interface 54

Memory 53

FIG. 6

70

I²C bus
752

Microprocessor 72

Bus
75

MIPI bus
751

External
camera
sensor 71

ISP unit
76

Image
sensor
77

Operation
processor
78

LCD
display
74

Image
encoder
79

Memory
73

FIG. 7

# INTERNATIONAL SEARCH REPORT

| International application No. |
| --- |
| PCT/CN2014/081787 |

## A. CLASSIFICATION OF SUBJECT MATTER

H04N 5/225 (2006.01) i

According to International Patent Classification (IPC) or to both national classification and IPC

## B. FIELDS SEARCHED

Minimum documentation searched (classification system followed by classification symbols)

H04N 5

Documentation searched other than minimum documentation to the extent that such documents are included in the fields searched

Electronic data base consulted during the international search (name of data base and, where practicable, search terms used)

CNABS, DWPI: camera, photo, environment, brightness, photometry, gain, compensation, target, object, speed, move

## C. DOCUMENTS CONSIDERED TO BE RELEVANT

| Category* | Citation of document, with indication, where appropriate, of the relevant passages | Relevant to claim No. |
| --- | --- | --- |
| Y | CN 101973738 A (HUAJING SCI & TECHNOLOGY CO., LTD.) 02 February 2011 (02.02.2011) the abstract, description, paragraphs [0025]-[0035], and figures 1 and 2 | 1, 6-8, 13-15 |
| Y | CN 102984461 A (CANON KK) 20 March 2013 (20.03.2013) description, paragraphs [0028]-[0036], and figure 2 | 1, 6-8, 13-15 |
| A | CN 102069633 A (CANON KK) 25 May 2011 (25.05.2011) the whole document | 1-15 |
| A | CN 101047786 A (SEIKO EPSON CORP.) 03 October 2007 (03.10.2007) the whole document | 1-15 |

☐ Further documents are listed in the continuation of Box C.　　　　☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 08 October 2014 (08.10.2014) | 14 October 2014 (14.10.2014) |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>WU, Shuang<br><br>Telephone No. (86-10) 62411507 |
| --- | --- |

Form PCT/ISA /210 (second sheet) (July 2009)

INTERNATIONAL SEARCH REPORT
Information on patent family members

| International application No. |
|---|
| PCT/CN2014/081787 |

| Patent Documents referred in the Report | Publication Date | Patent Family | Publication Date |
|---|---|---|---|
| CN 101973738 A | 02.02.2011 | None | |
| CN 102984461 A | 20.03.2013 | JP 2013055495 A | 21 March 2013 |
| | | US 2013057745 A | 07 March 2013 |
| CN 102069633 A | 25.05.2011 | US 2011102850 A1 | 05 May 2011 |
| | | US 8508804 B2 | 13 August 2013 |
| | | JP 2011093241 A | 12 May 2011 |
| CN 101047786 A | 03.10.2007 | CN 100574376 A | 23 December 2009 |

Form PCT/ISA /210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201310284374